# FASCICULE DE BREVET EUROPEEN

(11) **EP 1 681 223 B1**
(45) Date de publication et mention de la délivrance du brevet: **16.01.2008**
(21) Numéro de dépôt: 05292511.2
(22) Date de dépôt: 25.11.2005
(51) Int. Cl.: B62D 1/184

(54) **Dispositif de blocage en position d'une colonne de direction réglable de véhicule automobile, ensemble comprenant un tel dispositif, et véhicule automobile comprenant un tel ensemble**
Positionsblockiereinrichtung einer verstellbaren Kraftfahrzeuglenksäule, Anordnung mit einer solchen Einrichtung und Kraftfahrzeug mit einer solchen Anordnung
Position locking device of an adjustable motor vehicle steering column, assembly containing such a device and motor vehicle containing such an assembly

(30) Priorité: 12.01.2005 FR 0500318
(43) Date de publication de la demande: 19.07.2006
(73) Titulaire: Fuji Autotech France SAS, 25350 Mandeure (FR)
(72) Inventeur: Lidoine, Eric, 25700 Mathay (FR)
(74) Mandataire: Habasque, Etienne J. Jean-François

(56) Documents cités:
- US-A1- 2004 113 408
- ANONYMOUS: "A steering column arrangement comprising two flasks receiving between them the steering column, a tie extending according to an axis (A) between the flasks and axially supported on a first end of one of the flasks, and means of tightening of the flasks axially supported on the second end of the tie" RESEARCH DISCLOSURE, KENNETH MASON PUBLICATIONS, WESTBOURNE, GB, vol. 473, no. 66, septembre 2003 (2003-09), XP007132880 ISSN: 0374-4353

## Description

La présente invention concerne un dispositif de blocage en position d'une colonne de direction réglable de véhicule automobile, du type comprenant :
- un premier flasque et un deuxième flasque espacés, définissant entre eux un passage de réception de la colonne de direction ;
- un tirant s'étendant selon un axe entre le premier flasque et le deuxième flasque et prenant appui sur le premier flasque par une première extrémité, le tirant étant reçu dans des lumières ménagées dans le premier flasque et le deuxième flasque pour permettre le réglage en position de la colonne de direction par déplacement du tirant dans les lumières ; et
- des moyens de serrage prenant appui sur le deuxième flasque et la deuxième extrémité du tirant, les moyens de serrage comprenant une came mobile et un suiveur de came, la came et le suiveur de came étant mobiles l'un par rapport à l'autre, en rotation autour de l'axe du tirant et axialement le long du tirant, entre une position axialement écartée de blocage de la colonne par serrage du premier flasque et du deuxième flasque, et une position axialement rapprochée de libération de la colonne par relâchement du premier flasque et du deuxième flasque.

Le document publié dans "Research Disclosure" par "Kenneth Mason Publications", volume 473, numéro 66 décrit toutes les caractéristiques techniques du préambule de la revendication 1.

Le document EP 0 794 103 décrit un dispositif de blocage en position d'une colonne de direction réglable du type précité, comprenant une came mobile coopérant avec élément de placage fixe formant un suiveur de came et venant en appui sur le deuxième flasque. Cependant, un tel dispositif est coûteux à fabriquer.

Un but de la présente invention est de proposer un dispositif de blocage en position d'une colonne de direction réglable qui soit moins coûteux.

A cet effet, la présente invention propose un dispositif de blocage en position d'une colonne de direction réglable du type précité, caractérisé en ce que le suiveur de came est venu de matière avec le deuxième flasque.

Selon d'autres modes de réalisation, le dispositif de blocage en position d'une colonne de direction réglable comprend une ou plusieurs des caractéristiques suivantes, prise(s) isolément ou selon toutes les combinaisons techniquement possibles :
- la came présente des saillies formées sur une face orientée du côté du deuxième flasque;
- les saillies sont aptes à s'emboîter dans la lumière du deuxième flasque en position rapprochée de libération ;
- le deuxième flasque présente des reliefs en creux distincts de la lumière et adaptés pour recevoir les saillies de la came en position rapprochée de libération ;
- ladite face appartient à un levier d'actionnement du dispositif de blocage ;
- la came présente au moins un relief en creux formé sur une face orientée du côté du deuxième flasque, et le flasque présente au moins une saillie destinée à s'emboîter dans le relief en creux de la came en position rapprochée de libération.

L'invention concerne également un ensemble de colonne de direction comprenant une colonne de direction réglable et un dispositif de blocage tel que défini ci-dessus.

L'invention concerne encore un véhicule automobile équipé d'un ensemble tel que défini ci-dessus.

L'invention et ses avantages seront mieux compris à l'étude de la description qui va suivre, donnée uniquement à titre d'exemple, et faite en se référant aux dessins annexés, sur lesquels :
- la figure 1 est une vue schématique en perspective d'un ensemble comprenant une colonne de direction réglable et un dispositif de blocage conforme à l'invention ;
- les figures 2A et 2B sont des vues de l'ensemble de la figure 1, respectivement en coupe suivant la ligne II-II de la figure 2B et de côté, dans une position déverrouillée du dispositif de blocage ;
- les figures 3A et 3B sont analogues aux figures 2A et 2B et représentent l'ensemble dans une position verrouillée du dispositif de blocage ; et
- les figures 4 et 5 illustrent partiellement des dispositifs de blocage conformes à l'invention suivant des variantes du dispositif de blocage de la figure 1.

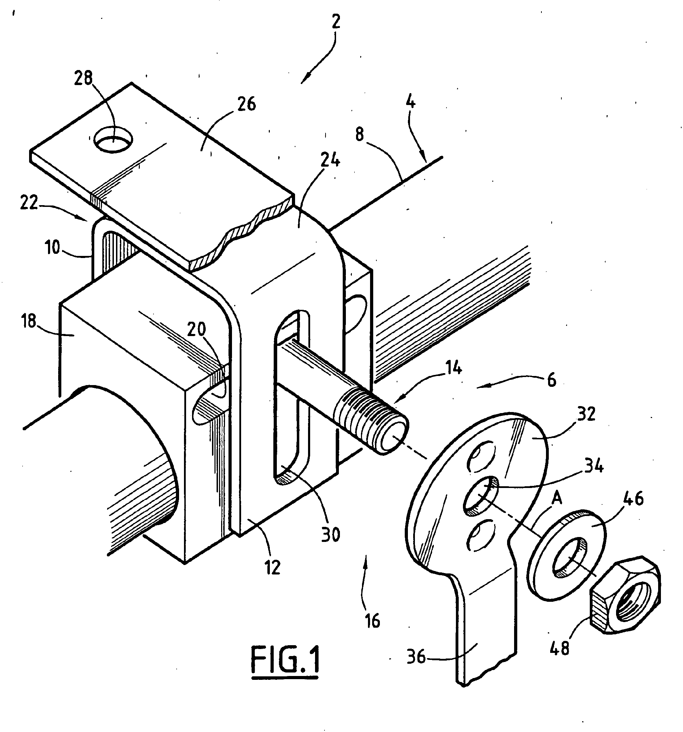

La figure 1 illustre un ensemble de colonne de direction de véhicule automobile comprenant une colonne de direction 4 réglable et un dispositif de blocage 6 en position de la colonne de direction 4.

De manière classique, la colonne de direction 4 comprend un corps de colonne 8 et un arbre de direction (non représenté), reçu à rotation à l'intérieur du corps 8, et dont une extrémité supérieure et arrière est destinée à être reliée à un volant de direction.

Le dispositif de blocage 6 comprend de manière classique :
- un premier flasque 10 et un deuxième flasque 12 définissant entre eux un passage de réception du corps de colonne 8,
- un tirant 14 qui s'étend selon un axe A entre les deux flasques 10, 12, et
- des moyens de serrage 16 des deux flasques 10 et 12.

Le corps de colonne 8 comprend un tronçon 18 munie d'une lumière 20 traversante s'étendant à l'intérieur du tronçon 18 transversalement à la colonne de direction 4. La lumière 20 présente un profil oblong allongé suivant la direction de la colonne de direction 4, et s'étend dans un plan à peu près horizontal situé au-dessus de la colonne 4.

Les flasques 10 et 12 forment les ailes latérales d'un support 22 en U inversé présentant une âme centrale 24 fixée sur une plaque 26 munie d'orifices 28 (un seul étant visible sur la figure 1) pour la fixer sur un tableau de bord (non représenté) du véhicule automobile.

Le tronçon 18 est placé entre les flasques 10 et 12, dans le passage qu'ils définissent.

Chaque flasque 10, 12 est munie d'une lumière 30 oblongue allongée suivant une direction à peu près verticale perpendiculaire à la direction de la colonne de direction 4. Seule la lumière 30 du deuxième flasque 12 est visible sur la figure 1.

Les lumières 30 sont allongées suivant une direction perpendiculaire à la direction d'allongement du profil de la lumière 20.

Les moyens de blocage 16 comprennent une came 32 et un suiveur de came formé par le deuxième flasque 12, comme cela sera expliqué plus en détail par la suite.

La came 32 présente une forme générale de disque, et est munie d'un orifice central 34. Les moyens de blocage 16 comprennent un levier 36 d'actionnement de la came 32 venu de matière avec celle-ci.

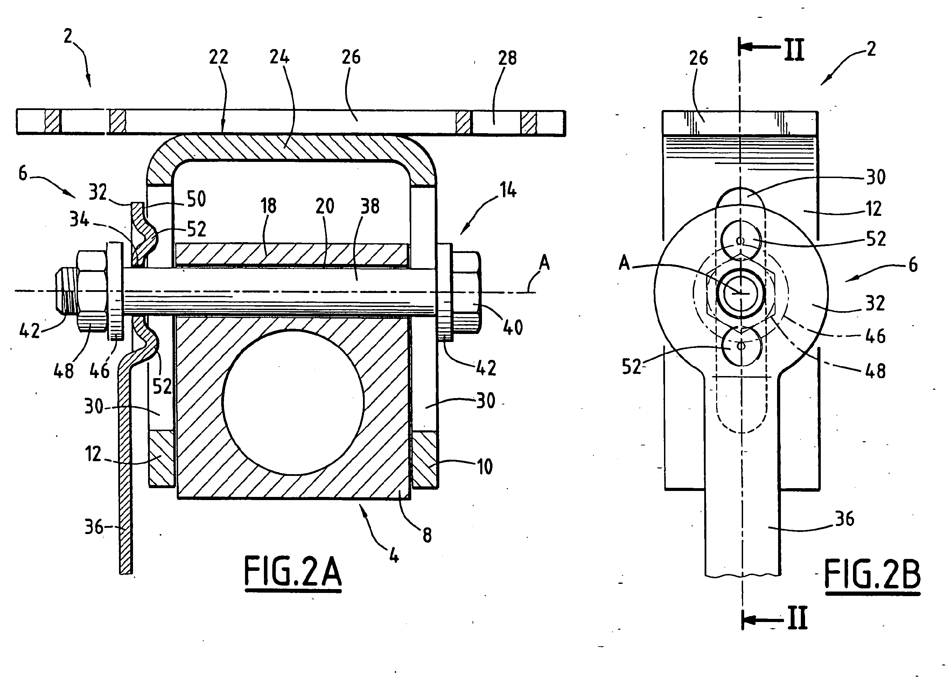

Comme cela est visible sur la figure 2A, le tirant 14 comprend une tige 38 s'étendant successivement (de la droite vers la gauche sur la figure 2A) à travers la lumière 30 du premier flasque 10, la lumière 20, la lumière 30 du deuxième flasque 12 et l'orifice 34 de la came 32.

Le tirant 14 comprend, à une première extrémité de la tige 38, une tête 40 en appui sur le flasque 10 du côté opposé à la colonne de direction 4 par l'intermédiaire d'une rondelle d'appui 42.

La deuxième extrémité de la tige 38 est munie d'un filetage 42. Le tirant 14 comprend une rondelle d'appui 46 enfilée sur cette deuxième extrémité de la tige 38, et un écrou 48 vissé sur le filetage 42 pour la retenue axiale de la rondelle d'appui 46.

La came 32 est enfilée sur la tige 38 axialement entre la rondelle d'appui 46 et le deuxième flasque 12. La came 32 est mobile à rotation autour de l'axe A sur la tige 38.

La came 32 présente, sur sa face 50 orientée du côté du deuxième flasque 12, deux saillies 52 diamétralement opposées par rapport à l'orifice 34. Les saillies 52 sont par exemple réalisées par emboutissage de la came 32, et se retrouvent en creux sur la face opposée de la came 32.

Tel que représenté sur les figures 2A et 2B, la came 32 est orientée autour de l'axe A de façon que les saillies 52 se situent en regard de la lumière 30 du deuxième flasque 12 et soient emboîtées dans la lumière 30. Cet emboîtement permet un rapprochement de la came 32 et du flasque 12.

La longueur du tirant 14 est prévue pour que dans cette position, la came 32 soit montée entre la rondelle 46 et le flasque 12 avec un jeu axialement suivant l'axe A. Les flasques 10 et 12 sont donc relâchés et le corps de colonne 8 portant le tirant 14 est libre de se déplacer avec un coulissement du tirant 14 dans les lumières 30 et/ou la lumière 20.

Un déplacement du corps de colonne 8 suivant son axe s'accompagne d'un coulissement du tirant 14 dans la lumière 20 et permet un réglage en profondeur de la colonne de direction 4.

Un déplacement du corps de colonne suivant la direction d'allongement des lumières 30 s'accompagne d'un coulissement du tirant 14 dans les lumières 30 et permet un réglage en hauteur de la colonne de direction.

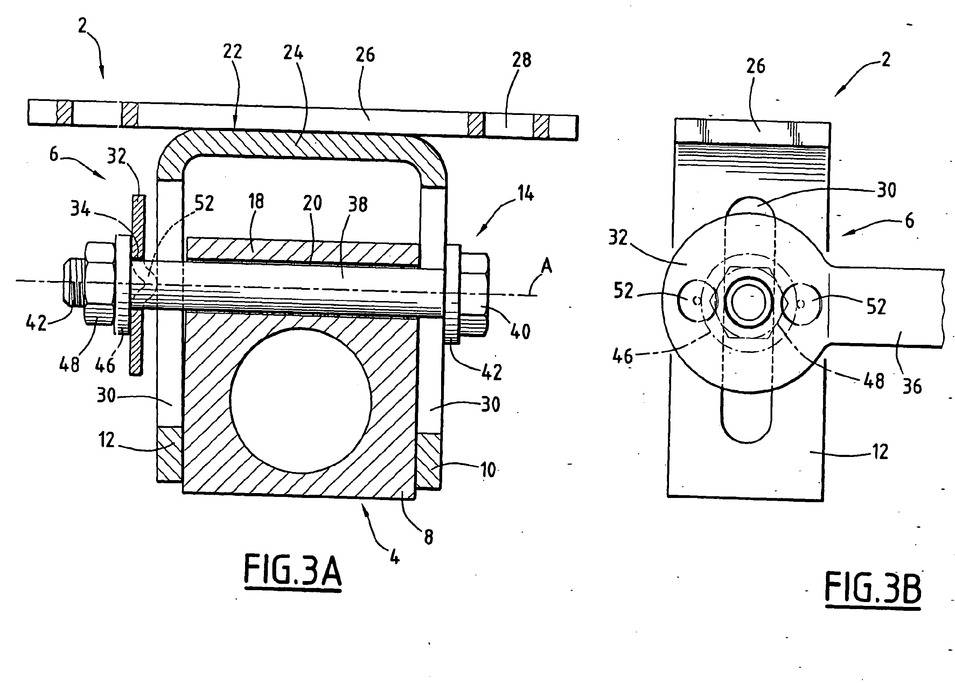

Tel qu'illustré sur les figures 3A et 3B, la came 32 a été pivotée autour de l'axe A à l'aide du levier 36 d'environ 90°. Dans cette position, les saillies 52 se situent en regard d'une partie pleine du flasque 12. Les saillies 52 sont en appui sur le flasque 12 du côté opposé au corps de colonne 8. La came 32 est maintenu écartée du flasque 12 par ses saillies 52.

La longueur du tirant 14 est prévue de façon que, dans cette position, la came 32 prend appui d'un côté sur la rondelle 46 et du côté opposé sur le deuxième flasque 12. Le tirant 14 prenant appui du côté opposé sur le premier flasque 10, il en résulte que les flasques 10 et 12 se rapprochent par déformation du support 22 et serrent le corps de colonne 8 entre eux (figure 3A). Le corps de colonne 8 s'en trouve immobilisé relativement aux flasques 10 et 12, et par conséquent relativement au tableau de bord.

Une rotation de la came 32 provoque donc un rapprochement des flasques 10 et 12 par coopération directe entre la came 32 et le deuxième flasque 12. En d'autres termes, le deuxième flasque 12 forme le suiveur de came associé à la came 32.

Ce mode de réalisation utilise avantageusement la lumière 30 du flasque 12 en tant que profil complémentaire des saillies 52 de la came 32. Il en résulte que le dispositif de blocage 6 est obtenu très facilement et de façon économique en prévoyant simplement une came 32 munie des saillies 52 adéquates.

Cette came 32 est d'autant plus simple que le levier 36 est venu de matière avec la came 32. La came 32 est facilement fabriquée par emboutissage d'une tôle métallique.

En dimensionnant la longueur des lumières 30, on prendra soin de prévoir une longueur suffisante pour permettre l'emboîtement des saillies 52 dans la lumière 30 en position extrême haute ou basse de réglage de la colonne de direction 4.

Les saillies 52 sont représentées simplement sous la forme de saillies en tronc de cône. Pour améliorer l'ergonomie, il est possible de prévoir des saillies de formes différentes, par exemple en forme de rampe s'épaississant pour obtenir un effort de serrage variant progressivement lors de la rotation de la came 32.

En variante, le flasque 12 est muni de reliefs distincts de la lumière 30, venus de matière avec le flasque 12, et servant de suiveur de came.

La came 32 est par exemple munie sur sa face 50 de reliefs en creux et le flasque 12 est muni de reliefs en saillie correspondants.

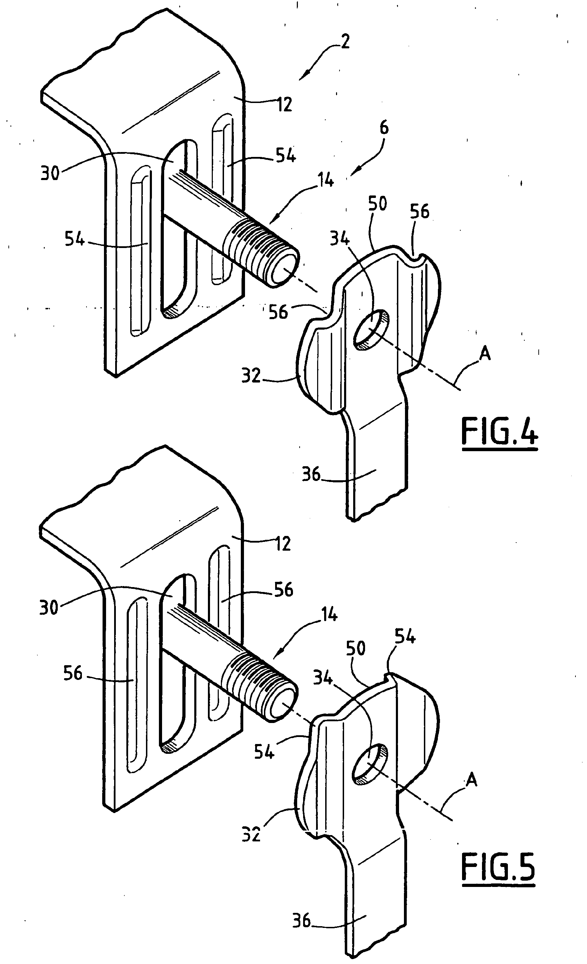

Un mode de réalisation est illustré à titre d'exemple sur la figure 4, sur laquelle le flasque 12 est muni de part et d'autre de l'orifice 30 de saillies 54 et la came 32 est munie sur la face 50 de rainures 56 complémentaires. Les saillies 54 sont allongées et parallèles à la lumière 30. Les rainures 56 sont allongées, parallèles entre elles et de même écartement que les saillies 54.

En position rapprochée de libération, les saillies 54 sont emboîtées dans les rainures 56. En position éloignée de serrage, elles leur sont perpendiculaires.

Le mode de réalisation illustré sur la figure 5 est identique à celui à la figure 4 à ceci près que les saillies 54 sont ménagées sur la came 32 et les rainures 56 sur le flasque 12.

En variante, la came 32 présente des saillies aptes à s'emboîter dans les lumières 30 et des reliefs (saillies ou creux) aptes à coopérer avec des reliefs complémentaires (respectivement creux ou saillies) distincts des lumières 30 en position rapprochée de libération.

L'invention s'applique également à une colonne de direction réglable dans une seule direction, par exemple en hauteur, auquel cas la lumière 20 ne présente pas une forme allongée de sorte que le tirant 14 est solidaire du corps de colonne 8.

## Revendications

1. Dispositif de blocage en position d'une colonne de direction réglable de véhicule automobile, du type comprenant :
- un premier flasque (10) et un deuxième flasque (12) espacés, définissant entre eux un passage de réception de la colonne de direction (4) ;
- un tirant (14) s'étendant selon un axe (A) entre le premier flasque (10) et le deuxième flasque (12) et prenant appui sur le premier flasque (10) par une première extrémité, le tirant (14) étant reçu dans des lumières (30) ménagées dans le premier flasque (10) et le deuxième flasque (12) pour permettre le réglage en position de la colonne de direction (4) par déplacement du tirant (14) dans les lumières (30) ; et
- des moyens de serrage prenant appui sur le deuxième flasque (12) et la deuxième extrémité du tirant (14), les moyens de serrage comprenant une came mobile (32) et un suiveur de came, la came (32) et le suiveur de came étant mobiles l'un par rapport à l'autre, en rotation autour de l'axe (A) du tirant (14) et axialement le long du tirant (14), entre une position axialement écartée de blocage de la colonne de direction (4) par serrage du premier flasque (10) et du deuxième flasque (12), et une position axialement rapprochée de libération de la colonne de direction (4) par relâchement du premier flasque (10) et du deuxième flasque (12) ;
**caractérisé en ce que** le suiveur de came est venu de matière avec le deuxième flasque (12).

2. Dispositif de blocage selon la revendication 1, dans lequel la came présente des saillies (52, 54) formées sur une face (50) orientée du côté du deuxième flasque (12).

3. Dispositif selon la revendication 2, dans lequel les saillies (52) sont aptes à s'emboîter dans la lumière (30) du deuxième flasque (12) en position rapprochée de libération.

4. Dispositif selon la revendication 3, dans lequel le deuxième flasque (12) présente des reliefs en creux (56) distincts de la lumière (30) et adaptés pour recevoir les saillies (54) de la came (32) en position rapprochée de libération.

5. Dispositif selon l'une quelconque des revendications 2 à 4, dans lequel ladite face (50) appartient à un levier d'actionnement (36) du dispositif de blocage.

6. Dispositif selon l'une quelconque des revendications précédentes, dans lequel la came (32) présente au moins un relief en creux (56) formé sur une face (50) orientée du côté du deuxième flasque (12), et le flasque (12) présente au moins une saillie (54) destinée à s'emboîter dans le relief en creux (56) de la came (32) en position rapprochée de libération.

7. Ensemble de colonne de direction comprenant une colonne de direction (4) réglable et un dispositif de blocage selon l'une quelconque des revendications précédentes.

8. Véhicule automobile équipé d'un ensemble de colonne de direction selon la revendication 7.

## Claims

1. Device for locking in position an adjustable steering column of a motor vehicle, said device being of the type comprising:
- a first flange (10) and a second flange (12) which are spaced apart and which define, between them, a passage for receiving the steering column (4);
- a tie-bolt (14) which extends along an axis (A) between the first flange (10) and the second flange (12) and rests on said first flange (10) by means of a first end, said tie-bolt (14) being received in apertures (30) provided in said first flange (10) and said second flange (12) so as to permit the positional adjustment of the steering column (4) by displacement of the tie-bolt (14) within the apertures (30); and
- clamping means which rest on the second flange (12) and the second end of the tie-bolt (14), said clamping means comprising a movable cam (32) and a cam-follower, said cam (32) and cam-follower being movable in relation to one another, in rotation about the axis (A) of the tie-bolt (14) and axially along said tie-bolt (14), between an axially separated position for locking the steering column (4) by clamping the first flange (10) and second flange (12), and an axially close position for releasing the steering column (4) by freeing said first flange (10) and second flange (12);
**characterised in that** the cam follower is in one piece with the second flange (12).

2. Locking device according to claim 1, wherein the cam has projections (52, 54) which are formed on a face (50) which is oriented towards the second flange (12).

3. Device according to claim 2, wherein the projections (52) are capable of fitting into the aperture (30) in the second flange (12) in the close releasing position.

4. Device according to claim 3, wherein the second flange (12) has indented offset portions (56) which are distinct from the aperture (30) and are adapted to receive the projections (54) on the cam (32) in the close releasing position.

5. Device according to any of claims 2 to 4, wherein the said face (50) belongs to a lever (36) for actuating the locking device.

6. Device according to any of the preceding claims, wherein the cam (32) has at least one indented offset portion (56) formed on a face which is oriented towards the second flange (12), and said flange (12) has at least one projection (54) which is intended to fit into the indented offset portion (56) in the cam (32) in the close releasing position.

7. Steering column assembly comprising an adjustable steering column (4) and a locking device according to any of the preceding claims.

8. Motor vehicle equipped with a steering column assembly according to claim 7.

## Patentansprüche

1. Positionsblockiervorrichtung einer verstellbaren Lenksäule eines Kraftfahrzeugs der Art mit:
- einem ersten Flansch (10) und einem zweiten Flansch (12), die voneinander beabstandet angeordnet sind, und die zwischen sich einen Durchgang zur Aufnahme der Lenksäule (4) definieren;
- einer Spannstange (14), die sich gemäß einer Achse (A) zwischen dem ersten Flansch (10) und dem zweiten Flansch (12) erstreckt und mit einem ersten Ende auf dem ersten Flansch (10) aufliegt, wobei die Spannstange (14) in den Langlöchern (30) aufgenommen ist, welche in dem ersten Flansch (10) und dem zweiten Flansch (12) ausgebildet sind, um die Positionseinstellung der Lenksäule (4) durch Verschiebung der Spannstange (14) in den Langlöchern (30) zu ermöglichen; und
- Festspannvorrichtungen, die auf dem zweiten Flansch (12) und dem zweiten Ende der Spannstange (14) aufliegen; wobei die Festspannvorrichtungen einen beweglichen Nocken (32) und eine Nockennachfolgevorrichtung aufweisen, wobei der Nocken (32) und die Nockennachfolgevorrichtung zueinander beweglich sind, und zwar in Drehung um die Achse (A) der Spannstange (14) und axial entlang der Spannstange (14) zwischen einer axial beabstandeten Blockierposition der Lenksäule (4) durch Festspannen des ersten Flansches (10) und des zweiten Flansches (12) und einer axial angenäherten Freigabeposition der Lenksäule (4) durch Lockerung des ersten Flansches (10) und des zweiten Flansches (12);
**dadurch gekennzeichnet, dass** die Nockennachfolgevorrichtung aus einem Material mit dem zweiten Flansch (12) hergestellt ist.

2. Blockiervorrichtung gemäß Anspruch 1, bei welcher der Nocken Vorsprünge (52, 54) aufweist, welche auf einer zu der Seite des zweiten Flansches (12) hin gerichteten Fläche (50) ausgebildet sind.

3. Vorrichtung gemäß Anspruch 2, bei welcher die Vorsprünge (52) in der Lage sind, sich in der angenäherten Freigabeposition in das Langloch (30) des zweiten Flansches (12) einzufügen.

4. Vorrichtung gemäß Anspruch 3, bei welcher der zweite Flansch (12) vertiefte Reliefs (56) aufweist, die sich von dem Langloch (30) unterscheiden, und die dafür eingerichtet sind, die Vorsprünge (54) des Nocken (32) in der angenäherten Freigabeposition aufzunehmen.

5. Vorrichtung gemäß irgendeinem der Ansprüche 2 bis 4, bei welcher diese Fläche (50) zu einem Betätigungshebel (36) der Blockiervorrichtung gehört.

6. Vorrichtung gemäß irgendeinem der vorherigen Ansprüche, bei welcher der Nocken (32) zumindest ein vertieftes Relief (56) aufweist, das auf einer zu der Seite des zweiten Flansches (12) hin ausgerichteten Fläche (50) ausgebildet ist, und der Flansch (12) zumindest einen Vorsprung (54) aufweist, der dafür bestimmt ist, sich in der angenäherten Freigabeposition in das vertiefte Relief (56) des Nockens (32) einzufügen.

7. Lenksäulenanordnung mit einer verstellbaren Lenksäule (4) und einer Blockiervorrichtung gemäß irgendeinem der vorherigen Ansprüche.

8. Kraftfahrzeug, das ausgestattet ist mit einer Lenksäulenanordnung gemäß Anspruch 7.
